# EUROPÄISCHE PATENTSCHRIFT

(11) **EP 2 215 806 B1**
(45) Veröffentlichungstag und Bekanntmachung des Hinweises auf die Patenterteilung: **14.12.2016**
(21) Anmeldenummer: 08840932.1
(22) Anmeldetag: 15.10.2008
(51) Int. Cl.: H04L 29/08, H04L 29/06

(54) **INTERNET-SMART-CARD**
INTERNET-SMART-CARD
CARTE À PUCE INTERNET

(30) Priorität: 24.10.2007 DE 102007050836
(43) Veröffentlichungstag der Anmeldung: 11.08.2010
(73) Patentinhaber: Giesecke & Devrient GmbH, 81677 München (DE)
(72) Erfinder: HEIDER, Axel, 82024 Taufkirchen (DE); ENGLBRECHT, Erich, 81671 München (DE)
(86) Internationale Anmeldenummer: PCT/EP2008/008741
(87) Internationale Veröffentlichungsnummer: WO 2009/052983

(56) Entgegenhaltungen:
- EP-A- 1 457 904
- EP-A- 2 001 202
- WO-A-2005/064889
- DE-A1-102005 030 305
- US-A1- 2005 184 163

## Beschreibung

Die vorliegende Erfindung betrifft ein Verfahren zum Durchführen einer Transaktion in einem Kommunikationsnetzwerk zwischen einem Kommunikationsgerät und einem Netzwerk-Server über einen mit dem Kommunikationsgerät verbundenen portablen Datenträger sowie einen derartigen Datenträger.

Eine Internet-Smart-Card wird an ein Kommunikationsgerät, wie z. B. einen Personal Computer oder einen Laptop oder dergleichen, über eine standardisierte Schnittstelle, wie z. B. eine USB-Schnittstelle, angeschlossen und stellt einen sicheren Verbindungsaufbau zu einem vertrauenswürdigen webbasierten Dienst bereit, wie z. B. Online Banking, e-Lerning oder dergleichen. Die Internet-Smart-Card stellt dadurch unter anderem sicher, dass ein Benutzer, der über einen auf seinem Kommunikationsgerät installierten Webbrowser einen Webserver im Internet anwählt, zu einer vertrauenswürdigen Website gelangt und nicht etwa umgeleitet oder manipuliert wird.

Zur Realisation dieser Sicherheitsfunktionalität benötigt eine Internet-Smart-Card einen Routing-Mechanismus, der eine http-Anfrage eines Webbrowsers an den betreffenden Internet-Webserver weiterleitet und eine http-Antwort von dem Internet-Webserver an den Webbrowser des Benutzers als Antwort auf die http-Anfrage zurückliefert. Hierzu baut die Internet-Smart-Card in der Regel eine TCP/IP-Verbindung zu dem betreffenden Internet-Server auf.

In EP 1393 523 B1 wird ein entsprechendes Vorgehen mit einer Internet-Smart-Card beschrieben. In dieser Lösung übernimmt die Internet-Smart-Card zusätzlich die Verwaltung von Cookies.

Der oben genannte Routing-Mechanismus wird beispielsweise von der Internet-Verbindungsfreigabe (ICS; "Internet Connection Sharing") des Betriebssystems Microsoft Windows® bereitgestellt. Eine ICS kann einen Verbindungsaufbau nur für jeweils eine physikalische Schnittstelle der Internet-Smart-Card bereitstellen, so dass z.B. beim Wechsel von einer kontaktbehafteten Datenkommunikation zu einer kontaktlosen Datenkommunikation die ICS deaktiviert und erneut aktiviert werden muss. Die Einrichtung einer Routing-Funktionalität erfordert zudem Administrationsrechte sowie neben dem üblichen Internet-Zugang des Webbrowsers einen separaten Internet-Zugang der Internet-Smart-Card. Zudem ist der hohe Datenverkehr zu und von der Internet-Smart-Card aufgrund der begrenzten Ressourcen einer Smart Card unter Umständen problematisch.

US 2005/0184163 A1 beschreibt eine Karte, die keine Internetfähigkeit aufweist, und ein Terminal, welches Anfragen an einen Netzwerkserver richtet. WO 2005/064889 A1 beschreibt einen DNS-Server auf einer Karte, welcher einem Browser des Endgerätes beispielsweise die Adresse eines Web-Servers auf der Karte bereitstellt, der auf http-Anfragen antwortet.

EP 1457 904 A1 betrifft eine Karte, welche die Nutzung von Werbeinhalten erfasst, beispielsweise in Form von Bonuspunkten für den Benutzer. Die Karte beantwortet eine http-Anfrage mit einer html-Seite, die so ausgestaltet ist, dass der Browser des Endgerätes einen Refresh der Ansicht mit den Inhalten einer Seite eines Netzwerkservers ausführt.

Demzufolge ist es die Aufgabe der vorliegenden Erfindung, eine effiziente Transaktion zwischen einem Kommunikationsgerät und einem Netzwerk-Server in einem Kommunikationsnetzwerk zu ermöglichen, die durch einen mit dem Kommunikationsgerät verbundenen portablen Datenträger gesichert wird.

Diese Aufgabe wird durch ein Verfahren zum Durchführen einer Transaktion in einem Kommunikationsnetzwerk zwischen einem Kommunikationsgerät und einem Netzwerk-Server über einen mit dem Kommunikationsgerät verbundenen portablen Datenträger sowie einen derartigen portablen Datenträger mit den Merkmalen der unabhängigen Ansprüche gelöst. Vorteilhafte Ausgestaltungen und Weiterbildungen sind in den abhängigen Ansprüchen angegeben.

Erfindungsgemäß wird eine Transaktion zwischen einem Kommunikationsgerät und einem Netzwerk-Server in einem Kommunikationsnetzwerk über einen mit dem Kommunikationsgerät verbundenen portablen Datenträger durch eine die Transaktion betreffende Anfrage von dem Kommunikationsgerät an den Datenträger initiiert. Als Antwort auf die empfangene Anfrage sendet der Datenträger eine Anfrageumleitungsnachricht an das Kommunikationsgerät, die die Transaktion mit dem Netzwerk-Server betrifft. Ein zur Realisierung dieses Verfahrens ausgestatteter portabler Datenträger umfasst eine Kommunikationsschnittstelle und eine Steuereinrichtung, wobei die Steuereinrichtung die Transaktion zwischen dem Kommunikationsgerät und einem Netzwerk-Server ermöglicht. Hierzu sendet die Steuereinrichtung des portablen Datenträgers als Antwort auf eine von dem verbundenen Kommunikationsgerät über die Kommunikationsschnittstelle empfangene, die Transaktion betreffende Anfrage eine Anfrageumleitungsnachricht an das Kommunikationsgerät, die diese Transaktion betrifft.

Erfindungsgemäß leitet der portable Datenträger eine Anfrage also nicht mittels einer Routing-Funktionalität über einen eigenen Zugang zu dem Kommunikationsnetzwerk an den betreffenden Netzwerk-Server weiter, sondern antwortet auf die Anfrage mit einer Anfrageumleitungsnachricht, die transaktionsspezifische Daten umfasst und das anfragende Kommunikationsgerät in die Lage versetzt, eine eigenständige, direkte Verbindung über das Kommunikationsnetzwerk zu dem Netzwerk-Server aufzubauen und die weitere Transaktion weitgehend unabhängig von dem portablen Datenträger mit dem Netzwerk-Server durchzuführen.

Dies verringert einerseits den Datenverkehr zu dem portablen Datenträger und andererseits ist hierfür ein eigenständiger Zugang des Datenträgers zu dem betreffenden Kommunikationsnetzwerk nicht erforderlich, sondern es genügt vielmehr eine über die Schnittstelleneinrichtung des portablen Datenträgers ohnehin gegebene beliebige lokale Kommunikationsverbindung zu dem Kommunikationsgerät.

Vorzugsweise kann ein portabler Datenträger eine eine bestimmte Transaktion betreffende Anfrage bei dem Kommunikationsgerät aktiv anfordern und dadurch die Transaktion initiieren. Dazu sendet der Datenträger eine Transaktionsaufforderungsnachricht an das Kommunikationsgerät, welche das Kommunikationsgerät veranlasst, die die gewünschte Transaktion betreffende Anfrage an den Datenträger zu senden. Die Transaktionsaufforderungsnachricht kann der Datenträger über einen auf dem Kommunikationsgerät aktivierten Browser anzeigen, der in dem Kommunikationsnetzwerk abrufbare Websites anzeigen kann. Der Benutzer des Kommunikationsgeräts wird so auffordern, eine entsprechende Anfrage an den Datenträger zu richten, beispielsweise durch Anklicken einer Kontrollfläche oder Verknüpfung auf der von dem Browser dargestellten Website.

Über diesen Mechanismus kann der Datenträger seinerseits eine Transaktion zwischen einem Kommunikationsgerät und einem Netzwerk-Server initiieren und ist nicht darauf angewiesen, dass der Benutzer die Transaktion beispielsweise über einen Browser startet, der die Transaktion mit dem Netzwerk-Server über das Kommunikationsnetzwerk durchführen kann. Der Datenträger kann dadurch beispielsweise ein Hochladen von Daten auf den Netzwerk-Server oder ein Herunterladen von Daten von dem Netzwerk-Server veranlassen.

Die Steuereinrichtung des Datenträgers kann in die Anfrageumleitungsnachricht an das Kommunikationsgerät Transaktionsdaten und/oder Nutzdaten einbinden, die von dem Kommunikationsgerät in eine an den Netzwerk-Server gerichtete, umgeleitete Anfrage eingebunden werden. Hierbei können die Transaktionsdaten z.B. eine kryptographische Signatur der Transaktion repräsentieren, die die Anfrage des Kommunikationsgeräts betrifft. Diese Signatur der Transaktion wird dann von der Steuereinrichtung über die Anfrageumleitungsnachricht und die umgeleitete Anfrage an den Netzwerk-Server gesendet, der durch Prüfen der Signatur feststellen kann, ob die Transaktion des Kommunikationsgeräts von dem Datenträger autorisiert ist. Darüber hinaus können die Transaktionsdaten auch anderweitige Authentisierungsdaten des Kommunikationsgeräts bzw. eines Benutzers des Kommunikationsgeräts gegenüber dem portablen Datenträger repräsentieren, mit denen dem Netzwerk-Server nachgewiesen werden kann, dass der Benutzer dem portablen Datenträger bekannt ist.

Ganz allgemein können die Transaktionsdaten, die im Rahmen der Anfrageumleitungsnachricht von dem Datenträger an das Kommunikationsgerät und von dort weiter an den Netzwerk-Server gesendet werden, Anweisungsdaten an das Kommunikationsgerät und/oder an den Netzwerk-Server sein, die den Empfänger veranlassen, eine bestimmte Anweisung auszuführen. In diesem Zusammenhang können derartige Anweisungsdaten an den Netzwerk-Server ein Herunterladen von auf dem Netzwerk-Server befindlichen Nutzdaten auf den Datenträger betreffen. Der Netzwerk-Server sendet dann die angeforderten, herunterzuladenden Nutzdaten in seiner Antwort auf die umgeleitete Anfrage an das Kommunikationsgerät und das Kommunikationsgerät leitet die empfangenen, herunterzuladenden Nutzdaten weiter an den Datenträger.

Ebenso kann die Anfrageumleitungsnachricht Anweisungsdaten an den Netzwerk-Server und Nutzdaten umfassen, wobei die Anweisungsdaten ein Hochladen der Nutzdaten auf den Netzwerk-Server betreffen. In diesem Fall werden die Anweisungsdaten und die Nutzdaten nach Erhalt von dem Kommunikationsgerät in die umgeleitete Anfrage an den Netzwerk-Server eingebunden und an diesen gesendet. Der Netzwerk-Server hinterlegt die empfangenen Nutzdaten schließlich derart in dem Kommunikationsnetzwerk, dass sie über einen Browser zugänglich sind.

Die Datenkommunikation zwischen dem Kommunikationsgerät und dem Datenträger wird vorzugsweise gemäß dem http-Kommunikationsprotokoll durchgeführt, so dass das Kommunikationsgerät eine http-Anfrage an den Datenträger sendet und der Datenträger mit einer http-Anfrageumleitung antwortet.

Vorzugsweise handelt es sich bei dem Kommunikationsnetzwerk um das Internet und bei dem Netzwerk-Server um einen Webserver im Internet. Auf dem Kommunikationsgerät ist ein Webbrowser installiert, über den ein Benutzer eine gewünschte Transaktion mit einem Internet-Webserver initiieren kann. Hierzu meldet sich der Benutzer vor der Transaktion gegenüber dem portablen Datenträger durch Eingeben einer identifizierenden Kennung auf einer von dem Datenträger auf dem Webbrowser dargestellten Website an. Der portable Datenträger wertet die Kennung aus und gewährt dem Benutzer gegebenenfalls die Möglichkeit, Transaktionen durchzuführen. Vorzugsweise baut der Webbrowser hierzu eine sichere Verbindung zu dem portablen Datenträger auf, vorzugsweise eine SSL-Verbindung oder dergleichen.

Der Benutzer kann die gewünschte Transaktion durch Anwählen einer auf dem Webbrowser dargestellten Verknüpfung initiieren und dadurch das Senden der entsprechenden http-Anfrage an den Datenträger durch den Webbrowser des Kommunikationsgeräts veranlassen. Der Webbrowser empfängt auch die nachfolgende Anfrageumleitungsnachricht des Datenträgers und bindet die Transaktionsdaten und/oder Nutzdaten der Anfrageumleitungsnachricht in eine an den Internet-Webserver gerichtete, umgeleitete http-Anfrage ein.

Die Kommunikation zwischen dem Kommunikationsgerät bzw. dessen Webbrowser und dem Internet-Webserver wird gemäß dem http-Protokoll durchgeführt. Dementsprechend erfordert die Transaktion zwischen dem Kommunikationsgerät und dem Internet-Webserver nicht notwendigerweise eine TCP/IP-Verbindung zwischen dem Datenträger und dem Internet-Server. Der Datenträger benötigt insofern auch keine Routing-Funktionalität, da die eigentliche Transaktion über eine direkte http-Verbindung zwischen dem Webbrowser und dem Internet-Server durchgeführt wird.

Der Datenträger ist vorzugsweise eine Internet-Smart-Card (ISC) mit einem eigenen, internen Webserver, der Inhalte als HTML-Dateien bereitstellt. Eine derartige Internet-Smart-Card ist vorzugsweise mit einem Computer oder einem ähnlichen Kommunikationsgerät über korrespondierende USB-Schnittstellen des Computers und der Internet-Smart-Card verbunden, wobei der Computer über eine eigenen Internet-Zugang verfügt, über den die Transaktion mit dem betreffenden Internet-Server schließlich durchgeführt wird. Die Aufgabe der Internet-Smart-Card ist in diesem Zusammenhang einerseits die Bereitstellung einer vertrauenswürdigen Internet-Adresse desjenigen Internet-Servers, mit dem ein Benutzer eine Transaktion wünscht, und andererseits die Autorisierung des Benutzers bzw. der betreffenden Transaktion gegenüber diesem Internet-Webserver.

Selbstverständlich kann das beschriebene Konzept mit beliebigen anderen portablen Datenträgern, Schnittstellen und Kommunikationsgeräten zur Realisierung von Transaktionen in einem beliebigen Kommunikationsnetzwerk gemäß geeigneter Kommunikationsprotokolle verwirklicht werden, sofern die betreffenden Geräte und Protokolle die oben beschriebene Verfahrensweise ermöglichen. Eine Einschränkung der Erfindung auf das Internet als Kommunikationsnetzwerk und eine Transaktion zwischen einem Kommunikationsgerät mit einem Webbrowser und einem Internet-Webserver über das http-Protokoll stellt insofern lediglich eine besonders bevorzugte Ausführungsform der Erfindung dar.

Weitere Vorteile der Erfindung ergeben sich aus der folgenden Beschreibung verschiedener erfindungsgemäßer Ausführungsbeispiele und Ausführungsalternativen. Es wird auf die folgenden Figuren verwiesen, welche zeigen:
- Figur 1: eine Anordnung bestehend aus einem Computer, einem Internet-Server sowie einer Internet-Smart-Card; und
- Figur 2: einen erfindungsgemäßen Verfahrensablauf.

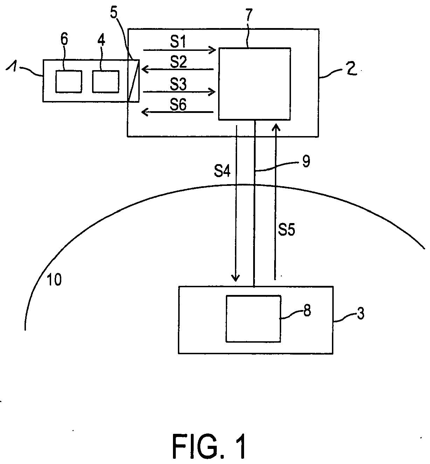

Figur 1 zeigt eine mit einem Computer 2 verbundene Internet-Smart-Card 1. Eine übliche Form der Verbindung eines derartigen portablen Datenträgers mit einem Computer 2 ist der Anschluss des Datenträgers an den Computer 2 über korrespondierende USB-Schnittstellen 5 des Computers 2 und der Internet-Smart-Card 1. Die Internet-Smart-Card 1 bietet einem Benutzer des Computers 2, der über einen auf dem Computer 2 ausführbaren Browser 7 einen Internet-Server 3 im Internet 10 anwählen möchte, einen gesicherten Verbindungsaufbau zu dem Internet-Server 3. Diese Sicherheitsfunktionalität der Internet-Smart-Card 1 umfasst insbesondere das Sicherstellen, dass ein Benutzer über den Browser 7 tatsächlich die von ihm gewünschte Website seines Internet-Servers anwählt und nicht auf eine manipulierte Website umgeleitet wird. Darüber hinaus kann die Internet-Smart-Card 1 Authentisierungs- und Autorisierungsfunktionalitäten zur Verfügung stellen, z. B. die Identifizierung eines Benutzers gegenüber der Internet-Smart-Card 1 bzw. gegenüber einem Internet-Server 3 oder die Autorisierung einer vom Benutzer gewünschten Transaktion gegenüber dem Internet-Server.

Üblicherweise umfasst eine Transaktion zwischen einem von einem Benutzer bedienten Browser 7 und einem Internet-Server 3 das Senden einer entsprechenden Anfrage von dem Browser 7 an den Internet-Server 3 und das Beantworten dieser Anfrage durch den Internet-Server 3 gegenüber dem Browser 7. Durch Zwischenschalten der Internet-Smart-Card 1 wird eine derartige über den Browser 7 gestartete Anfrage eines Benutzers zunächst über die USB-Schnittstelle 5 an eine Steuereinrichtung 4 der Internet-Smart-Card 1 gesendet, die dann den weiteren Verbindungsaufbau zu dem Internet-Server 3 koordiniert. In den in Figur 1 illustrierten Schritten S1 bis S6 geht eine Transaktion jedoch von der Internet-Smart-Card 1 bzw. von deren Steuereinrichtung 4 aus, indem die Steuereinrichtung 4 in Schritt S1 eine Transaktionsaufforderungsnachricht an den Browser 7 schickt, um diesen zu veranlassen, eine Transaktion mit einer entsprechenden http-Anfrage zu beginnen.

Durch die eingehende Transaktionsaufforderungsnachricht wird der Browser 7 des Computers 2 aktiviert und es wird z.B. eine Website auf dem Browser 7 dargestellt, über die der Benutzer des Computers 2 aufgefordert wird, eine bestimmte Interaktion durchzuführen, z.B. eine auf der Website dargestellte Kontrollfläche oder eine Verknüpfung anzuklicken. Der Zweck einer derartigen von der Internet-Smart-Card 1 ausgehenden Transaktion zwischen dem Browser 7 und dem Internet-Server 3 kann z.B. ein Hochladen von in dem Speicher 6 der Internet-Smart-Card 1 befindlichen Nutzdaten auf den Internet-Server 3 oder ein Herunterladen von in dem Speicher 8 des Internet-Servers 3 befindlichen Nutzdaten auf die Internet-Smart-Card 1 sein.

Wenn der Benutzer die über die Transaktionsaufforderungsnachricht auf dem Browser 7 angezeigte Verknüpfung anklickt, wird in Schritt S2 eine http-Anfrage von dem Browser 7 an die Steuereinrichtung 4 über die USB-Schnittstelle 5 gesendet. Die Steuereinrichtung 4 sendet dann in Schritt S3 eine Anfrageumleitungsnachricht zurück an den Browser 7, vorzugsweise als http-Umleitungsnachricht ("http-redirect"). Die Anfrageumleitungsnachricht umfasst Daten und Informationen, die den Browser 7 in die Lage versetzen, selbstständig einen Kontakt mit dem gewünschten Internet-Server 3 über eine Internetverbindung 9 des Computers 2 ins Internet 10 herzustellen. Beispielsweise kann die Anfrageumleitungsnachricht Transaktionsdaten und/oder Nutzdaten enthalten, die der Browser 7 in Schritt S4 in eine umgeleitete http-Anfrage an den Internet-Server 3 einbindet.

Derartige Transaktionsdaten können beispielsweise eine Authentisierung der Internet-Smart-Card 1 gegenüber dem Internet-Server 3 betreffen oder eine kryptographische Signatur der von dem Browser 7 initiierten Transaktion repräsentieren. Eine solche kryptographische Signatur wird beispielsweise von einem Kryptographiemodul (nicht dargestellt) der Internet-Smart-Card 1 anhand der empfangenen http-Anfrage erzeugt und stellt im einfachsten Fall die kryptographische Signatur der gesamten http-Anfrage oder von Teilen der http-Anfrage dar. Nach Erhalt dieser Signatur kann der Internet-Server 3 dann prüfen, ob die an ihn in Schritt S4 gerichtete umgeleitete http-Anfrage mit der ursprünglich in Schritt S2 an den Datenträger gerichtete http-Anfrage übereinstimmt. In letzterem Fall beantwortet der Internet-Server 3 die umgeleitete http-Anfrage des Browsers 7 und setzt damit die Transaktion fort. Durch die Auswertung der kryptographischen Signatur kann der Internet-Server 3 also sicherstellen, dass die an ihn gerichtete umgeleitete http-Anfrage der zuvor von der Internet-Smart-Card 1 autorisierten http-Anfrage entspricht. Die http-Antwort des Internet-Servers 3 kann abschließend in Schritt S6 von dem Browser 7 an die Steuereinrichtung 4 der Internet-Smart-Card 1 weitergeleitet werden.

Nutzdaten, die die Steuereinrichtung 4 mittels der Anfrageumleitungsnachricht in Schritt S3 an den Browser 7 sendet, können auf den Internet-Server 3 hochzuladende Daten sein, die der Internet-Server 3 derart in einem Speicher 8 ablegt, dass die Daten im Internet frei abrufbar sind. Darüber hinaus kann die Anfrageumleitungsnachricht Transaktionsdaten umfassen, die den Browser 7 und/oder den Internet-Server 3 hinsichtlich der Transaktion instruieren, beispielsweise durch eine Anweisung an den Browser 7, eine sichere (SSL) Verbindung 9 zu dem Internet-Server 3 aufzubauen.

Ebenso kann die Steuereinrichtung 4 Nutzdaten von dem Internet-Server 3 aktiv anfordern. In diesem Fall umfasst die Anfrageumleitungsnachricht Anweisungsdaten an den Browser 7 und den Internet-Server 3, die die von dem Internet-Server 3 herunterzuladenden Nutzdaten identifizieren. Die von dem Internet-Server 3 aus dem Speicher 8 entnommenen herunterzuladenden Nutzdaten werden dann in den Schritten S5 und S6 als http-Antwort anforderungsgemäß an die Internet-Smart-Card 1 gesendet.

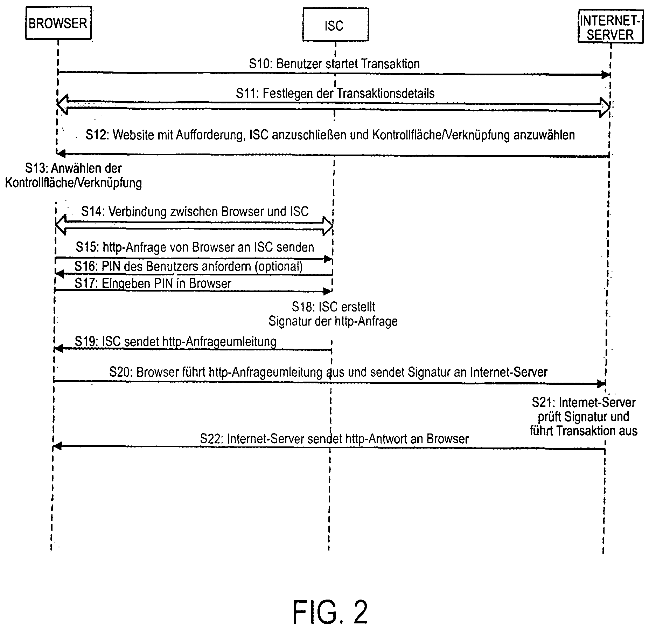

Figur 2 zeigt ein Flussdiagramm, das eine mögliche Interaktion zwischen einem Browser 7, einer Internet-Smart-Card 1 (ISC) und einem Internet-Server 3 detaillierter beschreibt. In Schritt S10 startet der Benutzer des Computers 2 eine von ihm gewünschte Transaktion über eine entsprechende Interaktion mit einem Browser des Computers 2. Figur 2 illustriert also den Fall, dass die Transaktion von dem Browser 7 ausgeht, und nicht, wie in Figur 1 illustriert, ursächlich von der Internet-Smart-Card 1 über eine vorgeschaltete Transaktionsaufforderungsnachricht.

In Schritt S11 werden Transaktionsdetails mittels einer Interaktion zwischen dem Browser 7 und dem Internet-Server 3 festgelegt. Im Rahmen dieser Festlegung von Transaktionsdetails ist es möglich, dass sich der Benutzer über den Browser 7 gegenüber dem Internet-Server 3 authentisiert beispielsweise über einen Anmeldevorgang mit Benutzername und Passwort. In Schritt S12 wird auf dem Browser 7 eine Website dargestellt, die den Benutzer auffordert, seine Internet-Smart-Card 1 über die USB-Schnittstelle 5 an den Computer 2 anzuschließen und dann eine Kontrollfläche oder eine Verknüpfung auf der Website anzuklicken. Die Kontrollfläche oder Verknüpfung kann beispielsweise den Hinweis enthalten, dass nachfolgend eine Verbindung mit der Internet-Smart-Card 1 hergestellt wird, um die gewünschte Transaktion durchzuführen.

In Schritt S13 betätigt der Benutzer die Kontrollfläche bzw. die Verknüpfung und veranlasst dadurch einen Verbindungsaufbau über die Schnittstelle 5 zwischen dem Browser 7 und der Internet-Smart-Card 1. In Schritt S14 initiiert der Browser 7 dann automatisch eine Verbindung zu der Internet-Smart-Card 1, die vorzugsweise besonders gesichert ist, z.B. durch eine Ver-/Entschlüsselung des Datenverkehrs (z. B. über das SSL-Protokoll).

In Schritt S15 wird eine in Schritt S13 über die Betätigung der Kontrollfläche bzw. der Verknüpfung durch den Benutzer erzeugte http-Anfrage an die Internet-Smart-Card 1 geschickt, so dass die in Schritt S11 festgelegten Transaktionsdetails der Internet-Smart-Card 1 und deren Steuereinrichtung 4 zur Verfügung gestellt werden. Diese Transaktionsdetails können z.B. die Transaktionsart oder Identifikationsmerkmale der Transaktionspartner betreffen oder Zufallszahlen repräsentieren, die für eine kryptographische Sicherung der Transaktion benötigt werden. Die Transaktionsdetails können verschlüsselt übertragen werden, da sie von dem Browser 7 nicht interpretiert werden müssen. Die http-Anfrage des Browsers 7 an die Internet-Smart-Card 1 umfasst gleichzeitig eine Aufforderung an die Internet-Smart-Card 1, die Transaktion derart zu autorisieren, dass diese Autorisierung später (in Schritt S21) von dem Browser 7 im Rahmen der umgeleiteten http-Anfrage gegenüber dem Internet-Server 3 nachgewiesen werden kann.

In Schritt S16 wird der Benutzer gegebenenfalls aufgefordert, sich gegenüber der Internet-Smart-Card 1 zu authentifizieren, falls dies bis zu diesem Zeitpunkt noch nicht geschehen ist oder der Benutzer aufgrund eines Zeitablaufs automatisch abgemeldet wurde. Der Benutzer kann sich beispielsweise mittels einer persönlichen Identifikationsnummer (PIN) gegenüber der Internet-Smart-Card 1 anmelden. Dazu gibt der Benutzer in Schritt S17 seine PIN in den Browser 7 ein und diese wird über die aufgebaute Verbindung an die Internet-Smart-Card zur dortigen Prüfung geschickt. Eine solche Authentifizierung des Benutzers gegenüber der Internet-Smart-Card 1 kann z.B. auch über die "http-Basic Authentication" oder beliebige andere geeignete Mechanismen erfolgen.

In Schritt S18 erzeugt die Internet-Smart-Card 1 bzw. eine geeignete Komponente, wie z. B. die Steuereinrichtung 4 oder ein separates Kryptographiemodul eine Signatur für die gewünschte Transaktion, die Autorisierungsdaten repräsentiert, mit denen der Browser 7 dem Internet-Server 3 nachweist, dass die Transaktion von der Internet-Smart-Card 1 autorisiert wurde. Diese Signatur kann neben den reinen Transaktionsdaten auch weitere Daten umfassen, wie z. B. eine Zufallszahl oder dergleichen.

In Schritt S19 wird als Antwort auf die http-Anfrage aus Schritt S15 eine Anfrageumleitungsnachricht in Form einer http-Umleitungsnachricht ("http-redirect") an den Browser 7 geschickt, die weitere Transaktions- und/oder Nutzdaten umfassen kann. Insbesondere umfasst die Anfrageumleitungsnachricht die in Schritt S18 erzeugte Signatur. In Schritt S20 wird die http-Umleitungsnachricht von dem Browser 7 interpretiert und die umgeleitete http-Anfrage zusammen mit weiteren Transaktionsdaten und/oder Nutzdaten aus der Anfrageumleitungsnachricht an den Internet-Server 3 gesendet, insbesondere die zur Autorisierung der Transaktion notwendige Signatur.

In Schritt S21 erhält der Internet-Server 3 die Signatur und prüft, ob die Signatur der durch die umgeleitete http-Anfrage des Browsers 7 wiedergegebenen Transaktion entspricht. Bei einer korrekten Signatur wird die in Schritt S10 initiierte Transaktion schließlich ausgeführt, so dass abschließend in Schritt S22 das Ergebnis in Form einer http-Antwort an den Browser 7 geschickt und der Benutzer über die erfolgreiche oder abgelehnte Transaktion informiert werden kann.

Die Verfahren gemäß den Schritten S1 bis S6 sowie S10 bis S22 sind insbesondere auch dazu geeignet, Nutzdaten von dem Internet-Server 3 auf die Internet-Smart-Card 1 zu übertragen, z.B. Aktualisierungen von auf der Internet-Smart-Card 1 installierten Programmen oder dergleichen. Sämtliche übertragenen Daten können dabei verschlüsselt werden, so dass sie nur der Internet-Smart-Card 1 und dem Internet-Server 3 unverschlüsselt vorliegen. In diesem Fall übernimmt der Browser nur die Weiterleitung der betreffenden Daten und kann sie nicht entschlüsseln oder anderweitig interpretieren.

## Patentansprüche

1. Verfahren zum Durchführen einer Transaktion in einem Kommunikationsnetzwerk (10) zwischen einem Kommunikationsgerät (2) und einem Netzwerk-Server (3) über einen mit dem Kommunikationsgerät (2) verbundenen portablen Datenträger (1), umfassend ein
Senden (S2; S15) einer die Transaktion betreffenden Anfrage von dem Kommunikationsgerät (2) an den Datenträger (1);
der Datenträger (1) als Antwort auf die Anfrage eine Anfrageumleitungsnachricht an das Kommunikationsgerät (2) sendet (S3; S19), die die Transaktion betrifft und die das Kommunikationsgerät (2) anweist, eine umgeleitete Anfrage an den Netzwerk-Server (3) zu senden (S4; S20);
wobei der Datenträger (1) in die Anfrageumleitungsnachricht Transaktionsdaten einbindet (S3; S19), die von dem Kommunikationsgerät (2) in die für den Netzwerk-Server (3) bestimmte, umgeleitete Anfrage eingebunden werden und an den Netzwerk-Server (3) gesendet werden (S4; S20), und
wobei der Datenträger (1) in die Anfrageumleitungsnachricht als Transaktionsdaten eine die Transaktion betreffende Signatur einbindet (S20), die es dem Netzwerk-Server (3) ermöglicht, eine Autorisierung des Kommunikationsgeräts (2) und/oder der Transaktion zu prüfen (S21).

2. Verfahren nach Anspruch 1, **dadurch gekennzeichnet, dass** die Anfrageumleitungsnachricht die Adresse des Netzwerk-Servers (3) umfasst.

3. Verfahren nach Anspruch 1 oder 2, **dadurch gekennzeichnet, dass** der Datenträger (1) eine Transaktionsaufforderungsnachricht an das Kommunikationsgerät (2) sendet (S1), welche das Kommunikationsgerät (2) veranlasst, die die Transaktion betreffende Anfrage an den Datenträger (1) zu senden (S2; S15).

4. Verfahren nach einem der Ansprüche 1 bis 3, **dadurch gekennzeichnet, dass** der Datenträger (1) in die Anfrageumleitungsnachricht als Transaktionsdaten Anweisungsdaten an das Kommunikationsgerät (2) und/ oder an den Netzwerk-Server (3) einbindet (S3; S19).

5. Verfahren nach Anspruch 4, **dadurch gekennzeichnet, dass** der Datenträger (1) in die Anfrageumleitungsnachricht Anweisungsdaten an den Netzwerk-Server (3) einbindet (S3; S19), die ein Herunterladen von auf dem Netzwerk-Server (3) befindlichen Nutzdaten auf den Datenträger (1) betreffen, wobei der Netzwerk-Server (3) die herunterzuladenden Nutzdaten an das Kommunikationsgerät (2) sendet (S5; S22) und das Kommunikationsgerät (2) die empfangenen, herunterzuladenden Nutzdaten an den Datenträger (1) weiterleitet (S6).

6. Verfahren nach Anspruch 4, **dadurch gekennzeichnet, dass** der Datenträger (1) in die Anfrageumleitungsnachricht Anweisungsdaten an den Netzwerk-Server (3) und Nutzdaten einbindet (S3; S19), wobei die Anweisungsdaten ein Hochladen der Nutzdaten auf den Netzwerk-Server (3) betreffen, und die Anweisungsdaten und die Nutzdaten von dem Kommunikationsgerät (2) in die umgeleitete Anfrage eingebunden werden (S4; S20) und der Netzwerk-Server (3) die empfangenen, zum Hochladen bestimmten Nutzdaten derart ablegt, das die Nutzdaten über das Kommunikationsnetzwerk (10) zugänglich sind.

7. Verfahren nach einem der Ansprüche 1 bis 6, **dadurch gekennzeichnet, dass** die Anfrage (S2; S15) als http-Anfrage an den Datenträger (2), die Anfrageumleitungsnachricht (S3; S19) als http-Anfrageumleitung an das Kommunikationsgerät (1) und die umgeleitete Anfrage (S4; S20) als umgeleitete http-Anfrage an den Netzwerk-Server (3) gesendet wird.

8. Verfahren nach Anspruch 7, **dadurch gekennzeichnet, dass** ein Benutzer des Kommunikationsgeräts (2) die Transaktion durch Anwählen einer auf einem Browser (7) des Kommunikationsgeräts (2) dargestellten Verknüpfung initiiert (S13) und das Senden (S2; S15) der http-Anfrage an den Datenträger (1) durch den Browser (7) bewirkt, wobei der Browser (7) die http-Anfrageumleitungsnachricht von dem Datenträger (1) empfängt (S3; S19).

9. Verfahren nach Anspruch 8, **dadurch gekennzeichnet, dass** der Benutzer durch Anzeigen (S12) der Transaktionsaufforderungsnachricht auf dem Browser (7) aufgefordert wird, eine Transaktion durch Anwählen einer auf dem Browser (7) dargestellten Kontrollfläche und/ oder Verknüpfung zu initiieren (S13) und eine die Transaktion betreffende http-Anfrage an den Datenträger (1) zu senden (S2; S15).

10. Verfahren nach Anspruch 8 oder 9, **dadurch gekennzeichnet, dass** der Benutzer sich durch Eingabe einer Kennung in den Browser (7) gegenüber dem Datenträger (1) anmeldet (S16, S17) und der Browser (7) eine sichere Kommunikationsverbindung zwischen dem Kommunikationsgerät (2) und dem Datenträger (1) aufbaut (S14).

11. Verfahren nach einem der Ansprüche 8 bis 10, **dadurch gekennzeichnet, dass** die Transaktion zwischen dem Browser (7) und dem Netzwerk-Server (3) gemäß dem http-Protokoll durchgeführt wird (S4, S5; S20-S22).

12. Verfahren nach einem der Ansprüche 1 bis 11, **dadurch gekennzeichnet, dass** die Transaktion im Internet (10) zwischen einem Computer, als dem Kommunikationsgerät (2), und einem Netzwerk-Server (3) durchgeführt wird (S2-S5; SS15, S19, S20-S22), wobei der Computer mit einer Internet-Smart-Card, als dem Datenträger (1), verbunden ist.

13. Portabler Datenträger (1) mit einer Kommunikationsschnittstelle (5) und einer Steuereinrichtung (4), wobei die Steuereinrichtung (4) eine Transaktion in einem Kommunikationsnetzwerk (10) zwischen einem über die Kommunikationsschnittstelle (5) mit dem portablen Datenträger (1) verbundenen Kommunikationsgerät (2) und einem Netzwerk-Server (3) ermöglicht, wobei die Steuereinrichtung (4) eingerichtet ist, als Antwort auf eine von dem verbundenen Kommunikationsgerät (2) über die Kommunikationsschnittstelle (5) empfangene, eine Transaktion zwischen dem Kommunikationsgerät (2) und einem Netzwerk-Server (3) betreffende Anfrage eine Anfrageumleitungsnachricht an das Kommunikationsgerät (2) zu senden, die die Transaktion betrifft,
wobei die Anfrageumleitungsnachricht Transaktionsdaten umfasst, die dazu geeignet und bestimmt sind, von dem Kommunikationsgerät (2) mittels einer umgeleiteten Anfrage an den Netzwerk-Server (3) gesendet zu werden, wobei die Anfrageumleitungsnachricht als Transaktionsdaten eine die Transaktion betreffende Signatur umfasst, die dazu geeignet und bestimmt ist, eine Autorisierung des Kommunikationsgeräts (1) und/ oder der Transaktion gegenüber dem Netzwerk-Server (3) nachzuweisen.

14. Portabler Datenträger (1) nach Anspruch 13, **dadurch gekennzeichnet, dass** die Steuereinrichtung (4) eingerichtet ist, die eine Transaktion betreffende Anfrage von einem verbundenen Kommunikationsgerät (2) durch eine Transaktionsaufforderungsnachricht an das Kommunikationsgerät (2) anzufordern, mit welcher das Kommunikationsgerät (2) angewiesen wird, die Anfrage an den Datenträger (1) zu senden.

15. Portabler Datenträger (1) nach Anspruch 13 oder 14, **dadurch gekennzeichnet, dass** der portable Datenträger eingerichtet ist zur Verwendung in einem Verfahren nach Anspruch 2 bis 12.

## Claims

1. A method for carrying out a transaction in a communication network (10) between a communication device (2) and a network server (3) via a portable data carrier (1) connected with the communication device (2), comprising a
sending (S2; S15) of a request concerning the transaction from the communication device (2) to the data carrier (1),
in response to the request the data carrier (1) sends (S3; S19) a request redirection message to the communication device (2) which concerns the transaction and commands the communication device (2) to send (S4; S20) a redirected request to the network server (3); wherein the data carrier (1) integrates (S3; S19) into the request redirection message transaction data which are integrated by the communication device (2) into the redirected request intended for the network server (3) and are sent (S4; S20) to the network server (3), and
wherein the data carrier (1) integrates (S20) into the request redirection message as transaction data a signature concerning the transaction, which allows the network server (3) to check (S21) an authorization of the communication device (2) and/or of the transaction.

2. The method according to claim 1, **characterized in that** the request redirection message comprises the address of the network server (3).

3. The method according to claim 1 or 2, **characterized in that** the data carrier (1) sends (S1) to the communication device (2) a transaction request message which causes the communication device (2) to send (S2; S15) the request concerning the transaction to the data carrier (1).

4. The method according to any of the claims 1 to 3, **characterized in that** the data carrier (1) integrates (S3; S19) into the request redirection message as transaction data command data to the communication device (2) and/or to the network server (3).

5. The method according to claim 4, **characterized in that** the data carrier (1) integrates (S3; S19) into the request redirection message command data to the network server (3) which concern a downloading of payload data present on the network server (3) to the data carrier (1), wherein the network server (3) sends (S5; S22) the payload data to be downloaded to the communication device (2) and the communication device (2) forwards (S6) the received payload data to be downloaded to the data carrier (1).

6. The method according to claim 4, **characterized in that** the data carrier (1) integrates (S3; S19) into the request redirection message command data to the network server (3) and payload data, wherein the command data concern an uploading of the payload data to the network server (3), and the command data and the payload data are integrated (S4; S20) into the redirected request by the communication device (2), and the network server (3) stores the received payload data intended for uploading in such a fashion that the payload data are accessible via the communication network (10).

7. The method according to any of the claims 1 to 6, **characterized in that** the request (S2; S15) is sent to the data carrier (2) in the form of an http request, the request redirection message (S3; S19) to the communication device (1) in the form of an http request redirect, and the redirected request (S4; S20) to the network server (3) in the form of a redirected http request.

8. The method according to claim 7, **characterized in that** a user of the communication device (2) initiates (S13) the transaction by selecting a link displayed on a browser (7) of the communication device (2) and effectuates the sending (S2; S15) of the http request to the data carrier (1) by the browser (7), wherein the browser (7) receives (S3; S19) the http request redirection message from the data carrier (1).

9. The method according to claim 8, **characterized in that** the user is prompted by displaying (S12) the transaction request message on the browser (7) to initiate (S13) a transaction by selecting a control surface and/or link displayed on the browser (7) and to send (S2; S15) an http request concerning the transaction to the data carrier (1).

10. The method according to claim 8 or 9, **characterized in that** the user registers (S16; S17) with the data carrier (1) by entering an identification in the browser (7) and the browser (7) establishes (S14) a secure communication connection between the communication device (2) and the data carrier (1).

11. The method according to any of the claims 8 to 10, **characterized in that** the transaction between the browser (7) and the network server (3) is carried out (S4, S5; S20-S22) according to the http protocol.

12. The method according to any of the claims 1 to 11, **characterized in that** the transaction is carried out (S2-S5; S15, S 19, S20-S22) in the Internet (10) between a computer as the communication device (2) and a network server (3), wherein the computer is connected with an Internet smart card as the data carrier (1).

13. A portable data carrier (1) with a communication interface (5) and a control device (4), wherein the control device (4) allows a transaction in a communication network (10) between a communication device (2) connected with the portable data carrier (1) via the communication interface (5) and a network server (3),
wherein the control device (4) is adapted to send, in response to a request concerning a transaction between the communication device (2) and a network server (3), received from the connected communication device (2) via the communication interface (5), a request redirection message concerning the transaction to the communication device (2),
wherein the request redirection message comprises transaction data which are suitable and intended to be sent by the communication device (2) to the network server (3) by means of a redirected request, wherein the request redirection message comprises as transaction data a signature concerning the transaction, said signature being suitable and intended to prove an authorization of the communication device (1) and/or of the transaction to the network server (3).

14. The portable data carrier (1) according to claim 13, **characterized in that** the control device (4) is adapted to require the request concerning a transaction from a connected communication device (2) through a transaction request message to the communication device (2), by which message the communication device (2) is commanded to send the request to the data carrier (1).

15. The portable data carrier (1) according to claim 13 or 14, **characterized in that** the portable data carrier is adapted for use in a method according to claim 2 to 12.

## Revendications

1. Procédé d'exécution d'une transaction, dans un réseau de communication (10), entre un appareil de communication (2) et un serveur réseau (3), par l'intermédiaire d'un support de données (1) portable relié à l'appareil de communication (2), comprenant un
envoi (S2; S15) d'une requête concernant la transaction, de l'appareil de communication (2) au support de données (1);
le support de données (1) envoie (S3; S19) à l'appareil de communication (2), en tant que réponse à la requête, une information de redirection de requête qui concerne la transaction et qui donne instruction à l'appareil de communication (2) d'envoyer (S4; S20) une requête redirigée au serveur réseau (3);
le support de données (1) intégrant (S3; S19) dans l'information de redirection de requête des données de transaction qui sont intégrées par l'appareil de communication (2) dans la requête redirigée destinée au serveur réseau (3) et sont envoyées (S4; S20) au serveur réseau (3), et
le support de données (1) intégrant (S20) dans l'information de redirection de requête, en tant que données de transaction, une signature qui concerne la transaction et qui permet au serveur réseau (3) de vérifier (S21) une autorisation de l'appareil de communication (2) et/ou de la transaction.

2. Procédé selon la revendication 1, **caractérisé en ce que** l'information de redirection de requête comprend l'adresse du serveur réseau (3).

3. Procédé selon la revendication 1 ou 2, **caractérisé en ce que** le support de données (1) envoie (S1) à l'appareil de communication (2) une information de demande de transaction qui amène l'appareil de communication (2) à envoyer (S2; S15) au support de données (1) la requête concernant la transaction.

4. Procédé selon une des revendications de 1 à 3, **caractérisé en ce que** le support de données (1) intègre (S3; S19) dans l'information de redirection de requête, en tant que données de transaction, des données d'instruction destinées à l'appareil de communication (2) et/ou au serveur réseau (3).

5. Procédé selon la revendication 4, **caractérisé en ce que** le support de données (1) intègre (S3; S19) dans l'information de redirection de requête des données d'instruction destinées au serveur réseau (3), lesquelles concernent un téléchargement en aval, sur le support de données (1), de données utiles se trouvant sur le serveur réseau (3), le serveur réseau (3) envoyant (S5; S22) à l'appareil de communication (2) les données utiles à télécharger en aval et l'appareil de communication (2) transférant au support de données (1) les données utiles reçues à télécharger en aval.

6. Procédé selon la revendication 4, **caractérisé en ce que** le support de données (1) intègre (S3; S19) dans l'information de redirection de requête des données d'instruction destinées au serveur réseau (3) et des données utiles, les données d'instruction concernant un téléchargement en amont des données utiles sur le serveur réseau (3), et les données d'instruction et les données utiles étant intégrées (S4; S20) par l'appareil de communication (2) dans la requête redirigée, et le serveur réseau (3) stockant de telle façon les données utiles reçues destinée au téléchargement en amont que les données utiles sont disponibles par l'intermédiaire du réseau de communication (10).

7. Procédé selon une des revendications de 1 à 6, **caractérisé en ce que** la requête (S2; S15) est envoyée en tant que requête http au support de données (2), que l'information de redirection de requête (S3; S19) est envoyée en tant que redirection http de requête à l'appareil de communication (1), et que la requête (S4; S20) redirigée est envoyée en tant que requête http redirigée au serveur réseau (3).

8. Procédé selon la revendication 7, **caractérisé en ce qu'**un utilisateur de l'appareil de communication (2) initie (S13) la transaction par sélection d'un lien représenté sur un navigateur (7) de l'appareil de communication (2) et déclenche par le navigateur (7) l'envoi (S2; S15) de la requête http au support de données (1), le navigateur (7) recevant de la part du support de données (1) l'information http de redirection de requête (S3; S19).

9. Procédé selon la revendication 8, **caractérisé en ce que** l'utilisateur est, par affichage (S12) de l'information de demande de transaction sur le navigateur (7), sommé d'initier (S13) une transaction par sélection d'une surface de contrôle et/ou lien représenté(e) sur le navigateur (7) et d'envoyer (S2; S15) au support de données (1) une requête http concernant la transaction.

10. Procédé selon la revendication 8 ou 9, **caractérisé en ce que** l'utilisateur se connecte (S16, S17) au support de données (1) par entrée d'un identifiant dans le navigateur (7), et **en ce que** le navigateur (7) établit (S14) une liaison de communion sûre entre l'appareil de communication (2) et le support de données (1).

11. Procédé selon une des revendications de 8 à 10, **caractérisé en ce que** la transaction entre le navigateur (7) et le serveur réseau (3) est exécutée (S4, S5; S20-S22) conformément au protocole http.

12. Procédé selon une des revendications de 1 à 11, **caractérisé en ce que** la transaction est exécutée (S2-S5; SS15, S19, S20-S22) sur Internet (10) entre un ordinateur, en tant que l'appareil de communication (2), et un serveur réseau (3), l'ordinateur étant relié à une carte à puce Internet, en tant que le support de données (1).

13. Support de données (1) portable doté d'une interface de communication (5) et d'un dispositif de commande (4), le dispositif de commande (4) permettant une transaction, dans un réseau de communication (10), entre un appareil de communication (2) relié par l'intermédiaire de l'interface de communication (5) au support de données (1) portable et un serveur réseau (3),
le dispositif de commande (4) étant configuré pour, en tant que réponse à une requête qui fut reçue, par l'intermédiaire de l'interface de communication (5), par l'appareil de communication (2) relié, et qui concerne une transaction entre l'appareil de communication (2) et un serveur réseau (3), envoyer à l'appareil de communication (2) une information de redirection de requête concernant la transaction,
l'information de redirection de requête comprenant des données de transaction adaptées et destinées à être envoyées par l'appareil de communication (2) au serveur réseau (3) au moyen d'une requête redirigée, l'information de redirection de requête comprenant en tant que données de transaction une signature qui concerne la transaction et qui est adaptée et destinée à prouver vis-à-vis du serveur réseau (3) une autorisation de l'appareil de communication (1) et/ou de la transaction.

14. Support de données (1) selon la revendication 13, **caractérisé en ce que** le dispositif de commande (4) est configuré pour solliciter de la part d'un appareil de communication (2) relié la requête concernant une transaction, cette sollicitation ayant lieu par une information de demande de transaction qui est adressée à l'appareil de communication (2) et par laquelle l'appareil de communication (2) reçoit l'instruction d'envoyer la requête au support de données (1).

15. Support de données (1) portable selon la revendication 13 ou 14, **caractérisé en ce que** le support de données (1) est configuré pour une utilisation dans un procédé selon les revendications de 2 à 12.
